Europäisches Patentamt

European Patent Office

Office européen des brevets

(19)

(11) Numéro de publication: **0 086 145**
**B1**

(12)

# FASCICULE DE BREVET EUROPEEN

(45) Date de publication du fascicule du brevet: **30.04.86**

(21) Numéro de dépôt: **83400214.9**

(22) Date de dépôt: **01.02.83**

(51) Int. Cl.⁴: **G 01 F 3/38,** G 01 F 25/00,
G 01 F 15/02, G 01 F 1/36

(54) **Débitmètre et installation de mélange d'un additif dans un liquide comprenant un tel débitmètre.**

(30) Priorité: **03.02.82 FR 8201708**

(43) Date de publication de la demande:
**17.08.83 Bulletin 83/33**

(45) Mention de la délivrance du brevet:
**30.04.86 Bulletin 86/18**

(84) Etats contractants désignés:
**AT BE CH DE GB IT LI LU NL SE**

(56) Documents cités:
**DE-A-2 012 961**
**FR-A-2 448 129**
**FR-A-2 448 130**
**FR-A-2 466 003**
**FR-C-1 398 916**

(73) Titulaire: **Octel S.A.**
**8 rue Bellini**
**F-75016 Paris (FR)**

(72) Inventeur: **Rodde, Christian**
**7, Résidence du Parc**
**F-91120 Palaiseau (FR)**
Inventeur: **Desarnaud, Jean**
**4, rue Hoche**
**F-92170 Vanves (FR)**

(74) Mandataire: **Nony, Michel**
**29, rue Cambacérès**
**F-75008 Paris (FR)**

Courier Press, Leamington Spa, England.

EP 0 086 145 B1

## Description

La présente invention concerne un débitmètre et une installation de mélange d'un additif liquide dans un autre liquide comprenant un tel débitmètre.

On connaît déjà des débitmètres comprenant une cuve disposée entre un circuit de vidange dans lequel on souhaite connaître le débit et un circuit d'alimentation à partir duquel la cuve est remplie lorsque le niveau du liquide qu'elle contient descend en dessous d'une valeur prédéterminée, et un plongeur suspendu dans la cuve par l'intermédiaire d'un capteur de force. (Voir document FR—A—2448129).

On connaît aussi des débitmètres du type ci-dessus dans lesquels la cuve est alternativement en phase de vidange sans remplissage (dite phase de vidange) et une phase de vidange avec remplissage (dite phase de vidange/remplissage). Pendant la phase de vidange le circuit d'alimentation est fermé et par conséquent le niveau dans la cuve baisse. Lorsque ce niveau a atteint la valeur prédéterminée le circuit d'alimentation est ouvert, le circuit de vidange restant bien entendu également ouvert. Le circuit d'alimentation est conçu de sorte que son débit soit très supérieur au débit du circuit de vidange de sorte que la durée de la phase vidange/remplissage soit relativement faible par rapport à la durée de la phase de vidange. Lorsque le niveau de liquide dans la cuve a atteint une nouvelle valeur supérieure prédéterminée le circuit d'alimentation est à nouveau fermé de sorte que le débitmètre se trouve de nouveau en phase de vidange.

La détermination du débit est effectuée au moyen du capteur de force. En effet celui-ci mesure le poids apparent du plongeur c'est-à-dire son poids diminué de la poussée d'Archimède exercée par le liquide. L'indication du capteur de force est donc représentative de la masse de liquide dans la cuve.

Il suffit par conséquent de dériver cette indication pour connaître le débit massique. Un tel débitmètre comporte toutefois un inconvénient important qui réside dans le fait que le signal du capteur de force n'est plus significatif du débit pendant les phases de vidange/remplissage. Ceci est évident puisque la variation du niveau du liquide dans la cuve résulte alors de la différence entre le débit d'alimentation et de débit de vidange.

On a déjà proposé pour remédier à cet inconvénient de considérer le débit pendant une phase de vidange/remplissage comme constant et égale à la dernière valeur qu'il avait pris pendant la phase de vidange immédiatement précédente.

Cette solution n'est toutefois pas totalement satisfaisante dans la mesure où le débit pendant la phase de vidange/remplissage n'est connu que de façon approximative puisqu'on ne tient pas compte pendant cette phase de ses variations éventuelles dues à quelque cause que ce soit.

On a également proposé (Voir document FR—A—2448130) d'utiliser deux cuves de telle sorte que l'une soit toujours en phase de vidange pendant que l'autre est en phase de remplissage.

Cet agencement conduit toutefois à doubler de nombreux composants du débitmètre et à ajouter des vannes de commutation d'un circuit à l'autre, ce qui conduit à augmenter dans une proportion importante le coût du débitmètre ainsi que les risques de panne.

Par ailleurs, le document FR—A—1398916 décrit un système d'étalonnage de débitmètre.

La présente invention vise à pallier les inconvénients ci-dessus en fournissant un débitmètre qui ne comporte qu'une seule cuve mais qui tienne compte des variations de débit pendant la phase de vidange/remplissage de cette cuve.

A cet effet l'invention a pour objet un débitmètre du type comprenant une cuve disposée entre un circuit de vidange fonctionnant en permanence dans lequel on souhaite connaître le débit et un circuit d'alimentation à partir duquel la cuve est remplie lorsque le niveau de liquide qu'elle contient descend en dessous d'une valeur prédéterminée en obtenant ainsi des phases de vidange sans remplissage de la cuve, dites phases de vidange, et des phases de vidange avec remplissage de la cuve, dites phases de vidange/remplissage, ledit débitmètre comprenant en outre un plongeur suspendu dans la cuve par l'intermédiaire d'un capteur de force caractérisé par le fait qu'il comporte en combinaison des moyens indépendants de la cuve et du plongeur aptes à fournir en permanence un signal représentatif approximativement du débit et des moyens d'étalonnage aptes à étalonner lesdits moyens indépendants de la cuve et du plongeur à partir de l'indication donnée par le capteur de force pendant toute la durée desdites phases de vidange.

Ce débitmètre comporte par conséquent une première chaîne de mesure qui fournit en permanence une indication du débit, que la cuve soit en phase de vidange ou en phase de vidange/remplissage.

L'imprécision de la mesure ainsi obtenue n'a pas d'incidence sur le résultat final.

En effet cette mesure est étalonnée par une deuxième chaîne de mesure à chaque phase de vidange.

La deuxième chaîne de mesure doit par contre avoir au moins la précision finale recherchée puisque c'est à partir des valeurs qu'elle fournit pendant chaque phase de vidange que la première chaîne de mesure élabore la mesure qu'elle fournit pendant la phase de vidange/remplissage suivante.

On notera qu'il ne s'agit pas dans la présente invention de commuter simplement le débitmètre d'un chaîne de mesure indépendante de la cuve et du plongeur à une chaîne de mesure qui en dépend selon que l'on se trouve en phase de vidange/remplissage ou en phase de vidange.

En effet un tel agencement conduirait à de brusques sauts de la valeur indiquée par le débitmètre un peu comme cela peut se produire dans les débitmètres à deux cuves.

Au contraire la valeur de sortie du débitmètre objet de la présente invention est continue puisqu'il s'agit de la valeur de sortie de la première chaîne de mesure étalonnée si l'on se trouve dans une phase de vidange de la cuve ou non étalonnée si l'on se trouve dans une phase de vidange/remplissage.

On peut d'ailleurs faire en sorte comme on le verra ci-après que la valeur de sortie étalonnée de la première chaîne de mesure soit en fait pratiquement égale à la valeur de sortie de la deuxième chaîne de mesure.

Le débit du circuit d'alimentation de la cuve ainsi que le volume de cette cuve sont déterminés de manière simple de telle sorte que d'une part les phases de vidange soient suffisamment longues pour que l'étalonnage puisse se faire et que d'autre part les phases de vidange/remplissage ne soient pas trop longues puisque la sortie de la deuxième chaîne de mesure n'est alors pas étalonnée.

Dans un mode de réalisation particulier lesdits moyens indépendants de la cuve et du plongeur comportent des moyens analogiques alors que les moyens d'étalonnage comportent des moyens numériques.

Avantageusement lesdits moyens indépendants de la cuve et du plongeur comprennent une vanne et un capteur de pression disposés dans le circuit de vidange de la cuve.

On sait en effet que le débit dans une canalisation munie d'une vanne est fonction d'une part de l'ouverture de cette vanne et d'autre part de sa pression d'alimentation.

On remarquera que dans ce cas la première chaîne de mesure du débitmètre selon l'invention mesure un débit volumique alors que la seconde chaîne mesure évidemment un débit massique. Ceci ne présente d'ailleurs pas d'inconvénient même si le débit que l'on souhaite mesurer est effectivement le débit massique puisque la valeur indiquée par la seconde chaîne de mesure est réétalonnée à chaque phase de vidange. Il faudrait que la densité du fluide dont on mesure le débit varie de façon significative pendant une phase de vidange/remplissage pour que le résultat de la mesure soit altéré en terme de débit massique.

Divers moyens peuvent être envisagés pour déduire le débit volumique des caractéristiques de la vanne et de la pression mais un agencement est particulièrement avantageux lorsque cette vanne est une vanne de régulation à commande électrique puisqu'alors son courant d'alimentation est déterminé avec précision et que la section de son ouverture en dépend directement.

Dans ce cas, les moyens indépendants de la cuve et du plongeur comportent de préférence des moyens pour extraire la racine carrée de la valeur fournie par le capteur de pression, des moyens représentatifs de la fonction de transfert de la vanne pour déduire la section de son ouverture de son courant d'excitation et des moyens pour multiplier ladite racine carrée par la section de l'ouverture de la vanne.

On sait en effet que le débit volumique d'une vanne est directement proportionnel au produit de sa section d'ouverture par la racine carrée de la pression différentielle aval-amont.

Cet agencement permet en particulier de tenir compte de la variation de la pression d'alimentation de la vanne liée à l'augmentation de niveau dans la cuve pendant la phase de vidange/remplissage.

De leur côté les moyens d'étalonnage comprennent des moyens pour dériver par rapport au temps le signal provenant du capteur de force.

Dans certains cas il pourra être utile de filtrer le signal provenant du capteur de force avant de le dériver. En effet, dans le cas contraire, des anomalies telles que des vibrations pourraient conduire à une interprétation erronée du signal du capteur.

Dans un mode de réalisation particulier de l'invention le débitmètre comprend des moyens pour interrompre la sortie des moyens de dérivation pendant les phases de vidange/remplissage de la cuve.

On a vu en effet que le signal provenant de la deuxième chaîne de mesure n'est pas significatif pendant le remplissage de la cuve. On peut par conséquent interrompre la sortie des moyens de dérivation pendant cette phase.

Avantageusement les moyens d'étalonnage comprennent alors un comparateur à mémoire apte à comparer la valeur de sortie du débitmètre à la valeur de sortie des moyens de dérivation et à conserver en mémoire la dernière valeur de sortie des moyens de dérivation lorsque la sortie des moyens de dérivation est interrompue.

Le rôle de ce comparateur est double.

Pendant la phase de vidange son rôle revient à comparer les valeurs de sortie des deux chaînes de mesure afin de réaliser l'étalonnage de la première chaîne de mesure par la deuxième chaîne de mesure.

Pendant la phase de vidange/remplissage ce comparateur garde en mémoire la dernière valeur de sortie de la première chaîne de mesure de sorte qu'aucune interruption n'est décelée à la sortie du débitmètre mais que par contre l'étalonnage n'est plus effectué puisqu'il n'est plus tenu compte de la variation de la valeur de sortie des moyens de dérivation.

Le débitmètre comprend également de préférence des moyens aptes à fournir un signal représentatif du produit du signal fourni par lesdits moyens indépendants de la cuve et du plongeur par la valeur de sortie du comparateur à mémoire.

Ainsi la sortie du débitmètre, qui peut correspondre à la sortie de ce multiplicateur, est pendant les phases de vidange/remplissage directement proportionnelle à la valeur de sortie de la première chaîne de mesure. En effet on a vu que pendant cette phase le comparateur à mémoire ne prend en compte que la dernière valeur prise par la sortie de la deuxième chaîne de mesure lors de la phase de vidange précédente. Par contre pendant les phases de vidange ce multiplicateur permet d'assurer l'étalonnage de la première chaîne de mesure permanente par la deuxième chaîne de mesure étalon.

Le débitmètre selon l'invention peut également comprendre des moyens aptes à comparer la valeur de sortie du capteur de force avec une première valeur correspondant au niveau minimum dans la cuve et avec une deuxième valeur correspondant au niveau maximum dans la cuve.

Dans ce cas des moyens peuvent être prévus pour déclencher une phase de vidange/remplissage lorsque la valeur de sortie du capteur de force atteint ladite première valeur et à mettre fin à cette phase lorsque la valeur de sortie du capteur de force atteint ladite deuxième valeur.

L'invention a également pour objet une installation de mélange d'un additif liquide dans un autre liquide, caractérisée par le fait qu'elle comprend un débitmètre tel que décrit ci-dessus dans le circuit dudit additif liquide.

Cette installation peut également comprendre des moyens pour déterminer le courant d'excitation de ladite vanne disposée dans le circuit de vidange de la cuve en fonction du débit mesuré.

Ces moyens peuvent comprendre notamment un programmateur de dosage qui détermine la valeur de consigne du courant d'excitation de la vanne et par conséquent du débit en fonction du débit réel et éventuellement d'autres paramètres.

On peut également prévoir un capteur de température dudit autre liquide et des moyens pour corriger les moyens d'étalonnage en fonction de la température mesurée.

Ceci est particulièrement intéressant lorsqu'on ne connaît que le débit volumique du liquide dans lequel on souhaite ajouter l'additif puisqu'il est alors nécessaire d'ajuster le débit massique de l'additif en fonction de la température.

C'est ainsi que si l'on ajoute du plomb tétraéthyle à l'essence, le dosage doit être par exemple de 0,4 g par litre à 15°. Mais cette valeur varie avec la température.

L'invention dans un mode de réalisation particulier permet par conséquent d'ajuster automatiquement le débit de l'additif en fonction de la température du liquide dans lequel il est ajouté.

Ces moyens de correction sont de préférence agencés pour modifier la valeur fournie par les moyens de dérivation.

Dans le cas particulier où ces moyens de dérivation sont constitués par un dérivateur numérique cela revient à modifier la quantité d'additif correspondant à une impulsion à la sortie de ce dérivateur.

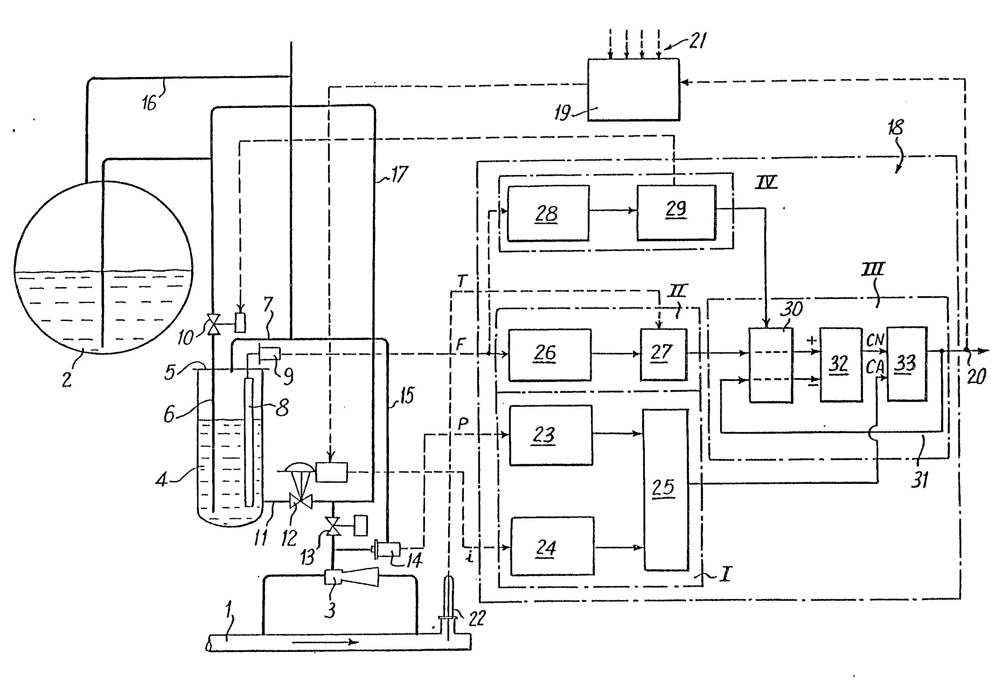

On décrira maintenant à titre d'exemple non limitatif un mode de réalisation particulier de l'invention en référence au dessin schématique annexé qui représente une installation de mélange et de dosage comprenant un débitmètre selon l'invention.

Cette installation comporte tout d'abord une canalisation 1 dans laquelle circule le liquide auquel on souhaite mélanger un autre liquide contenu dans un réservoir de stockage 2.

Le liquide circulant dans le circuit 1 est par exemple de l'essence et l'additif du plomb tétraéthyle.

Un éjecteur 3 est monté de façon connue sur la canalisation 1 pour assurer le mélange.

Le débitmètre comprend une cuve 4 qui est dans le cas présent sensiblement cylindrique avec un couvercle 5 à sa partie supérieure.

Le couvercle 5 est traversé d'une part par un conduit d'alimentation 6 provenant du réservoir de stockage 2 et d'autre part par un conduit de mise à l'air libre 7.

Un plongeur 8 est disposé de façon connue dans la cuve 4 pour transmettre la poussée d'Archimède qui s'exerce sur lui à un capteur de force 9 par exemple à jauge extensométrique.

Une vanne d'alimentation 10 est disposée sur le conduit d'alimentation 6 entre le réservoir de stockage 2 et la cuve 4.

Un conduit de vidange 11 est par ailleurs raccordé au fond de la cuve 4 entre cette cuve et l'éjecteur 3.

Sur le circuit 11 sont disposés successivement en partant de la cuve 4 une vanne de régulation de débit 12, une vanne de sécurité 13 et un capteur de pression différentiel ou transmetteur de vide 14 qui est par ailleurs relié à l'air libre par une canalisation 15.

Le réservoir de stockage 2 est également mis à l'air libre en 16 tandis qu'un conduit 17 relie le conduit de vidange 11 entre la vanne de réglage 12 et la vanne de sécurité 13 à la partie supérieure du conduit d'alimentation 6.

L'amorçage du débitmètre s'effectue en fermant la vanne de régulation 12 et en ouvrant la vanne de sécurité 13. La dépression provoquée dans l'éjecteur 3 par l'écoulement du fluide dans le conduit 1 est transmise par la canalisation 17 au réservoir 2 et provoque l'amorçage.

Le débitmètre comporte également un ensemble électronique 18 qui sera décrit en détail ci-après.

La vanne de régulation 12 est réglée par un organe de règlage de débit 19 qui peut être par exemple un calculateur dont une entrée est constituée par la sortie 20 du débitmètre, les autres entrées 21 dépendant d'autres paramètres du système tels par exemple le débit dans la canalisation.

Dans le cas présent le calculateur 19 impose le courant d'excitation de la vanne de règlage 12 lequel courant constitue également une entrée i de l'ensemble 18.

L'installation comporte enfin un capteur transmetteur de température 22 qui mesure la température du liquide circulant dans la canalisation.

La sortie du capteur 22 correspond à l'entrée T de l'ensemble 18.

Les autres entrées dans l'ensemble électronique 18 sont l'entrée F reliée au capteur de force 9 et l'entrée P reliée au transmetteur de vide 14.

L'ensemble électronique 18 comprend d'une manière générale:

une première unité de traitement I constituant avec le transmetteur de vide 14 et le circuit d'excitation de la vanne de réglage 12 une première chaîne de mesure,

une deuxième unité de traitement II constituant avec le capteur de force 9 une deuxième chaîne de mesure,

une unité d'étalonnage III, et

une unité de commande IV.

La première unité de traitement I reçoit en P la sortie du transmetteur de vide 14 sur un extracteur de racine carrée 23 et en i le courant d'excitation de la vanne de régulation 12 sur un circuit 24.

Le circuit 24 représente la fonction de transfert de la vanne de régulation de sorte que son entrée étant constituée par le courant d'alimentation de cette vanne, sa sortie représente la section de passage de la vanne.

Les sorties de l'extracteur de racines carrées 23 et du circuit 24 représentant la fonction de transfert de la vanne de régulation 12 sont appliquées à un multiplicateur analogique 25 dont la sortie CA constitue également la sortie de la première unité de traitement I.

On constate par conséquent que l'unité de traitement I réalise le produit de la racine carrée de la pression en aval de la vanne de régulation 12 par la section d'ouverture de cette vanne de sorte que sa sortie est approximativement proportionnelle au débit volumique dans la canalisation 11 quel que soit l'état d'ouverture ou de fermeture de la vanne d'alimentation 10.

La deuxième unité de traitement II comporte tout d'abord un filtre 26 dans lequel est introduit le signal provenant du capteur de force 9 afin d'en éliminer le bruit de fond ainsi que les parasites dûs par exemple à des vibrations.

La sortie du filtre 26 est introduite dans un dérivateur numérique 27 dont la sortie constitue la sortie de l'unité de traitement II.

La sortie du capteur de force 9 représentant la poussée d'Archimède exercée par le liquide dans la cuve 4 sur le plongeur 8 est proportionnelle à la quantité de fluide dans la cuve 4. Par conséquent lorsque la vanne d'alimentation 10 est fermée et que le liquide de la cuve 4 s'écoule dans le conduit 11 la sortie du dérivateur numérique 27 représente le débit dans le conduit 11.

Les sorties des deux unités de traitement I et II sont appliquées à l'unité d'étalonnage III qui sera décrite plus en détail ci-après.

Le circuit de commande IV comporte d'une part un comparateur de niveau 28 et d'autre part un circuit logique de séquence 29 qui reçoit la sortie du comparateur 28.

La sortie du capteur de force 9 est appliquée à l'entrée du comparateur 28 qui compare cette sortie avec une première valeur correspondant au niveau minimal de liquide dans la cuve 4 et à une seconde valeur correspondant au niveau maximal.

Lorsque le niveau minimal est détecté par le comparateur 28 celui-ci amène le circuit logique de séquence 29 à provoquer l'ouverture de la vanne d'alimentation 10 et lorsque le niveau maximal est détecté par le comparateur 28 celui-ci amène le circuit logique de séquence 29 à provoquer la fermeture de la vanne d'alimentation 10.

Une autre sortie du circuit logique de séquence est appliquée à un ensemble de portes 30 de l'unité d'étalonnage III que l'on décrira maintenant en détail.

Les portes logiques 30 reçoivent et transmettent d'une part le signal issu de la deuxième unité de traitement II et d'autre part la sortie 20 du débitmètre par l'intermédiaire d'une boucle de contre-réaction 31.

Les deux sorties des portes 30 sont appliquées aux entrées respectivement positive et négative d'un comparateur numérique à mémoire 32.

Le comparateur 32 reçoit donc des impulsions sur ses deux entrées lorsque les portes 30 sont ouvertes.

Les impulsions reçues sur l'entrée positive ont une fréquence proportionnelle au débit mesuré par le capteur de force 9 par l'intermédiaire de la chaîne de traitement II et les impulsions reçues sur l'entrée négative ont une fréquence proportionnelle au débit indiqué par le débitmètre. On constate par conséquent que lorsque les portes 30 sont ouvertes la sortie du débitmètre est asservie à la valeur mesurée par le capteur de force 9.

La sortie CN du comparateur 32 est un nombre binaire qui lorsque les portes 30 sont ouvertes est proportionnel à la différence entre les deux entrées et qui lorsque les portes 30 se ferment conserve la même valeur que celle qu'il avait immédiatement avant la fermeture des portes 30.

Cette sortie du comparateur 32 est appliquée à une entrée d'un oscillateur programmable 33 sont l'autre entrée reçoit la sortie de la première chaîne de traitement I c'est-à-dire la sortie du multiplicateur 27.

L'oscillateur programmable 33 délivre à sa sortie, qui est la sortie 20 du débitmètre, des impulsions dont la fréquence est proportionnelle au produit $CN \times CA$.

Par conséquent, lorsque la cuve 4 est en phase de remplissage l'unité de commande IV ferme les portes logiques 30 de sorte que la sortie 20 du débitmètre suit la sortie du capteur de pression 14 par l'intermédiaire de la première unité de traitement I comme cela à été décrit ci-dessus.

Lorsque le liquide dans la cuve 4 arrive à son niveau bas celui-ci est détecté par le comparateur 28 de sorte que l'unité de commande IV ferme les portes 30 et que la sortie CN du comparateur 32 devient constante et égale à la dernière valeur qu'elle avait précédemment.

L'oscillateur programmable 33 suit alors la valeur de son entrée CA et varie par conséquent en fonction du débit tel que déterminé par le courant i et la pression différentielle mesurée par le transmetteur de vide 14.

Lorsque le liquide dans la cuve 4 arrive de nouveau à son niveau haut celui-ci est détecté par le comparateur 28 et l'unité de commande 4 ouvre de nouveau les portes 30.

On notera en particulier que la sortie 20 du débitmètre ne subit jamais de discontinuité.

Ceci est évident lors du passage d'une phase de vidange à une phase de vidange/remplissage puisque l'entrée CN de l'oscillateur programmable 33 est maintenue constante à la valeur qu'elle avait précédemment.

Si pendant une phase de vidange/remplissage le débit est modifié la sortie de l'oscillateur programmable 33 variera comme son entrée CA. Lorsque, à la fin de cette phase de vidange/remplissage, les portes 30 reconnecteront l'entrée CN de l'oscillateur 33 celui-ci se mettra alors à suivre cette entrée CN mais celle-ci aura également été modifiée en conséquence du fait de la variation du débit.

Là encore on ne notera par conséquent aucune discontinuité.

En outre, le comparateur à mémoire peut prendre en compte une moyenne des dernières valeurs de sortie de la deuxième chaîne de mesure et non pas la dernière valeur uniquement.

**Revendications**

1. Débitmètre du type comprenant une cuve (4) disposée entre un circuit de vidange fonctionnant en permanence dans lequel on souhaite connaître le débit et un circuit d'alimentation à partir duquel la cuve est remplie lorsque le niveau de liquide qu'elle contient descend en dessous d'une valeur prédéterminée en obtenant ainsi des phases de vidange sans remplissage de la cuve, dites phases de vidange, et des phases de vidange avec remplissage de la cuve, dites phases de vidange/remplissage, ledit débitmètre comprenant en outre, un plongeur (8), suspendu dans la cuve, par l'intermédiaire d'un capteur (9) de force, caractérisé par le fait qu'il comprend en combinaison des moyens (12, 14, I) indépendants de la cuve (4) et du plongeur (8) aptes à fournir en permanence un signal représentatif approximativement du débit, et des moyens (II, III) d'étalonnage, aptes à étalonner lesdits moyens (12, 14, I) indépendants de la cuve et du plongeur à partir de l'indication donnée par le capter (9) de force pendant toute la durée desdites phases de vidange.

2. Débitmètre selon la revendication 1, caractérisé par le fait que lesdits moyens (12, 14, I) indépendants de la cuve et du plongeur comportent des moyens analogiques.

3. Débitmètre selon l'une quelconque des revendication 1 et 2, caractérisé par le fait que les moyens (II, III) d'étalonnage comportent des moyens numériques.

4. Débitmètre selon l'une quelconque des revendications 1 à 3, caractérisé par le fait que lesdits moyens (12, 13, I) indépendants de la cuve et du plongeur comprennent une vanne (12) et un capteur de pression (14) disposés dans le circuit de vidange de la cuve.

5. Débitmètre selon la revendication 4, caractérisé par le fait que les moyens (12, 14, I) indépendants de la cuve et du plongeur comportent des moyens (23) pour extraire la racine carrée de la valuer fournie par le capteur de pression, des moyens (24) représentatifs de la fonction de transfert de la vanne pour déduire la section de son ouverture de son courant d'excitation, et des moyens (25) pour multiplier ladite racine carrée par la section de l'ouverture de la vanne.

6. Débitmètre selon l'une quelconque des revendications 1 à 5, caractérisé par le fait que les moyens (II, III) d'étalonnage comprennent des moyens (27) de dérivation pour dériver par rapport au temps le signal provenant du capteur (9) de force.

7. Débitmètre selon la revendication 6, caractérisé par le fait que les moyens (II, III) d'étalonnage comprenent des moyens (30) pour interrompre la sortie des moyens (27) de dérivation pendant les phases de vidange/remplissage de la cuve (4).

8. Débitmètre selon la revendication 7, caractérisé par le fait que les moyens (II, III) d'étalonnage comprennent un comparateur (32) à mémoire apte à comparer la valeur de sortie du débitmètre à la valeur de sortie des moyens (27) de dérivation et à conserver en mémoire la dernière valeur de sortie des moyens de dérivation lorsque la sortie des moyens (27) de dérivation est interrompue.

9. Débitmètre selon la revendication 8, caractérisé par le fait que les moyens (II, III) d'étalonnage comprenent des moyens (33) aptes à fournir un signal représentatif du produit du signal fourni par lesdits moyens (12, 14, I) indépendants de la cuve et du plongeur par la valeur du signal de sortie du comparateur (32) à mémoire.

10. Débitmètre selon l'une quelconque des revendications 1 à 9, caractérisé par le fait qu'il comprend des moyens (28) aptes à comparer la valeur de sortie du capteur (9) de force avec une première valeur correspondant au niveau minimum dans la cuve (4) et avec une deuxième valeur correspondant au niveau maximum dans la cuve (4).

11. Débitmètre selon la revendication 10, caractérisé par le fait qu'il comprend des moyens (29) aptes à déclencher une phase de vidange/remplissage lorsque la valeur de sortie du capteur (9) de force atteint ladite première valeur et à mettre fin à cette phase lorsque la valeur de sortie du capteur (9) de force atteint ladite deuxième valeur.

12. Installation de mélange d'un additif liquide dans un autre liquide caractérisé par le fait qu'elle comprend un débitmètre selon l'une quelconque des revendications 1 à 11 dans le circuit dudit additif liquide.

13. Installation de mélange d'un additif liquide dans un autre liquide caractérisée par le fait qu'elle comprend, dans le circuit dudit additif liquide, un débitmètre selon la revendication 4 ou l'une des revendications 5 à 11 en liaison avec la revendication 4 et des moyens pour déterminer le courant d'excitation de ladite vanne disposée dans le circuit de vidange de la cuve en fonction du débit mesuré.

14. Installation selon l'une quelconque des revendications 12 et 13, caractérisée par le fait qu'elle comprend un capteur (22) de température dudit autre liquide et des moyens de correction pour corriger lesdits moyens (II, III) d'étalonnage en fonction de la température mesurée.

15. Installation selon la revendication 14, caractérisée par le fait que les moyens de correction sont agencés pour modifier la valeur fournie par les moyens (27) de dérivation.

**Patentansprüche**

1. Durchflußmesser, der einen Behälter (4) aufweist, der zwischen einem dauernd in Betrieb befindlichen Durchflußkreis und einem Speisekreis vorgesehen ist, von dem aus die Nachfüllung des Behälters erfolgt, sobald der Pegel der in ihm befindlichen Flüssigkeit unter einen vorbestimmten Wert fällt, so daß sich Durchflußphasen ohne Nachfüllvorgänge, sogenannte Durchflußphasen, und Durchflußphasen mit Nachfüllvorgängen, sogenannte Nachfülldurchlaufphasen, ergeben, wobei der Durchflußmesser außerdem einen Tauchkörper (8) aufweist, der im Behälter mittels eines Kräftefühlers (9) aufgehängt ist, dadurch gekennzeichnet, daß vom Behälter (4) und vom Tauchkörper (8) unabhängige Mittel (12, 14, I), die zur dauernden Abgabe eines annähernd den Durchfluß wiedergebenden Signals geeignet sind, in Kombination mit Mitteln (II, III) zur Eichung vorgesehen sind, die geeignet sind, die vom Behälter und Tauchkörper unabhängigen Mittel (12, 14, I) ausgehend von der Anzeige des Kräftefühlers (9) während der ganzen Dauer der Durchflußphasen zu eichen.

2. Durchflußmesser nach Anspruch 1, dadurch gekennzeichnet, daß die vom Behälter und dem Tauchkörper unabhängigen Mittel (12, 14, I) analog arbeitende Mittel aufweisen.

3. Durchflußmesser nach einem der Ansprüche 1 und 2, dadurch gekennzeichnet, daß die Mittel (II, III) zur Eichung numerisch arbeitende Mittel aufweisen.

4. Durchflußmesser nach einem der Ansprüche 1 bis 3, dadurch gekennzeichnet, daß die vom Behälter und Tauchkörper unabhängigen Mittel (12, 14, I) ein Ventil (12) und einem Druckfühler (14) aufweisen, die im Durchflußkreis des Behälters liegen.

5. Durchflußmesser nach Anspruch 4, dadurch gekennzeichnet, daß die vom Behälter und Tauchkörper unabhängigen Mittel (12, 14, I) ihrerseits Mittel (23) aufweisen, um die Quadratwurzel aus dem Wert zu ziehen, der vom Druckfühler geliefert wird, daß weitere Mittel (24) welche die Durchflußfunktion des Ventils wiedergeben, vorgesehen sind, um seinen Öffnungsquerschnitt aus dem Erregerstrom herzuleiten, und daß mit anderen Mitteln (25) die erwähnte Quadratwurzel mit dem Öffnungsquerschnitt des Ventils multipliziert wird.

6. Durchflußmesser nach einem der Ansprüche 1 bis 5, dadurch gekennzeichnet, daß die Mittel (II, III) zur Eichung Abzweigungsmittel (27) aufweisen, um in Bezug auf die Zeit das vom Kräftefühler (9) herrührende Signal abzuleiten.

7. Durchflußmesser nach Anspruch 6, dadurch gekennzeichnet, daß die Mittel (II, III) ihrerseits Mittel (30) zur Unterbrechung der Ausgangsseite der Abzweigungsschaltung (27) während der Nachfülldurchlaufphasen aufweist.

8. Durchflußmesser nach Anspruch 7, dadurch gekennzeichnet, daß die Mittel (II, III) zur Eichung einen Vergleicher (32) aufweisen, dessen Speicher geeignet ist, um den Ausgangswert des Durchflußmessers mit dem Wert am Ausgang der Abzweigschaltung (27) zu vergleichen und den letzten Wert der sich am Ausgang der Abzweigungsschaltung bei der Unterbrechung der Ausgangsseite der Abzweigschaltung (27) bildet, zu bewahren.

9. Durchflußmesser nach Anspruch 8, dadurch gekennzeichnet, daß die Mittel (II, III) zur Eichung ihrerseits Mittel (33) aufweisen, die geeignet sind, ein Signal zu liefern, welches dem Produkt des Signals, das von den vom Behälter und Tauchkörper unabhängigen Mitteln (12, 14, I) stammt, dem Signalwert entspricht, der sich am Ausgang des mit Gedächtnisspeicher versehenen Vergleichers (32) ergibt.

10. Durchflußmesser nach einem der Ansprüche 1 bis 9, dadurch gekennzeichnet, daß er Mittel (28) aufweist, die geeignet sind, um den Wert am Ausgang des Kräftefühlers (9) einerseits mit einem ersten Wert, der der minimalen Pegelhöhe im Behälter entspricht, und andererseits mit einem zweiten Wert zu vergleichen, der der maximalen Pegelhöhe im Behälter entspricht.

11. Durchflußmesser nach Anspruch 10, dadurch gekennzeichnet, daß er Mittel (29) aufweist, die eine Nachfülldurchlaufphase auslösen, wenn der Ausgangswert am Kräftefühler (9) den genannten ersten Wert erreicht und die diese Phase beenden, wenn der Ausgangswert des Kräftefühlers den besagten zweiten Wert erreicht.

12. Vorrichtung zum Mischen eines flüssigen Zuschlagstoffes mit einer anderen Flüssigkeit, dadurch gekennzeichnet, daß sie einen Durchflußmesser nach einem der vorhergehenden Ansprüche 1 bis 11 im Kreis des flüssigen Zuschlagstoffes enthält.

13. Vorrichtung zum Mischen eines flüssigen Zuschlagstoffes mit einer anderen Flüssigkeit, dadurch gekennzeichnet, daß sie im Zuschlagstoffkreis einen Durchflußmesser nach Anspruch 4 oder nach einem der Ansprüche 5 bis 11 in Verbindung mit Anspruch 4 aufweist und mit Mitteln zur Bestimmung des Erregerstromes des im Durchflußkreis liegenden Ventils in Abhängigkeit vom Durchfluß versehen ist.

14. Vorrichtung nach einem der Ansprüche 12 und 13, dadurch gekennzeichnet, daß sie einen Temperaturfühler (22) für die andere Flüssigkeit aufweist und mit Korrekturmitteln ausgestattet ist, welche die Mittel (II, III) zur Eichung in Abhängigkeit von der Temperatur korrigiert.

15. Vorrichtung nach Anspruch 14, dadurch gekennzeichnet, daß die Korrekturmitteln zur Modifizierung des von den Abzweigmitteln (27) gelieferten Wertes dienen.

**Claims**

1. Flow meter of the type comprising a container (4) located between a continuously operating drainage circuit in which it is desired to ascertain the flow and a feed circuit from which the container is filled when the liquid level therein descends below a predetermined value obtaining thus phases of draining without refilling of container, referred to as draining phases, and draining phases with refilling of the container, referred to as draining/filling phases, the said flow meter comprising further, a plunger (8) suspended in the container, by the intermediary of a force sensor (9), characterised by that fact that it comprises in combination means (12, 14, I) independent of the container (4) and of the plunger (8) adapted to provide continuously a signal indicating approximately the flow, and adjustment means (II, III) adapted to adjust the said means (12, 14, I) independent of the container and of the plunger commencing from the indication given by the force sensor (9) during the whole of the duration of the said phases of draining.

2. Flow meter according to claim 1, characterised by the fact that the said means (12, 14, I) independent of the container and of the plunger comprise analogical means.

3. Flow meter according to either of claims 1 and 2, characterised by the fact that the adjustment means (II, III) comprise numerical means.

4. Flow meter as claimed in any one of claims 1 to 3 characterised by the fact that the said means (12, 14, I) independent of the container and of the plunger comprise a valve (12) and a pressure sensor (14) located in the drainage circuit of the container.

5. Flow meter according to claim 4, characterised by the fact that the means (12, 14, I) independent of the container and of the plunger comprise means (23) for extracting the square root of the value provided by the force sensor means (24) representative of the function of the flow through the valve in order to deduce the section of its opening from its excitation current, and means (25) to multiply the said square root by the section of the opening of the valve.

6. Flow meter according to any one of claims 1 to 5, characterised by the fact that the adjustment means (II, III) comprise derivation means (27) in order to derive with reference to time the signal emanating from the force sensor (9).

7. Flow meter according to claim 6, characterised by the fact that the adjustment means (II, III) comprise means (30) for interrupting the output of derivation means (27) during the phases of draining/refilling of the container (4).

8. Flow meter according to claim 7 characterised by the fact that the adjustment means (II, III) comprise a memory comparator (32) adapted to compare the value of the output of the flow meter to the value of the output of the derivation means (27) and to retain in memory the last value of the output of the derivation means when the output of the derivation means (27) is interrupted.

9. Flow meter according to claim 8, characterised by the fact that the adjustment means (II, III) comprise means (33) adapted to provide a signal representative of the product of the signal provided by the said means (12, 14, I) independent of the container and of the plunger by the value of the signal of the output of the memory comparator (32).

10. Flow meter according to any one of claims 1 to 9, characterised by the fact that it comprises means (28) adapted to compare the value of the output of the force sensor (9) with a first value corresponding to the minimum level in the container (4) and with a second value corresponding to the maximum level in the container (4).

11. Flow meter according to claim 10, characterised by the fact that it comprises means (29) adapted to release a phase of draining/filling when the value of the output of the force sensor (9) reaches the said first value and terminates the phase when the value of the output of the force sensor (9) attains the said second value.

12. Installation for mixing an additive liquid in another liquid characterised by the fact that it comprises a flow meter according to any one of claims 1 to 11 in the circuit of the said additive liquid.

13. Installation for mixing an additive liquid in another liquid characterised by the fact that it comprises, in the circuit of the said additive liquid, a flow meter according to claim 4 or one of claims 5 to 11 when dependent upon claim 4 and means for determining the excitation current of the said valve disposed in the draining circuit of the container as a function of the flow measured.

14. Installation according to either of claims 12 and 13 characterised by the fact that it comprises a temperature sensor (22) of the other liquid and correction means for correcting the adjustment means (II, III) as a function of the temperature measured.

15. Installation according to claim 14, characterised by the fact that the correction means are arranged to modify the value provided by the derivation means (27).

0 086 145